(19) Europäisches Patentamt
European Patent Office
Office européen des brevets

(11) **EP 3 051 142 B1**

(12) **EUROPÄISCHE PATENTSCHRIFT**

(45) Veröffentlichungstag und Bekanntmachung des Hinweises auf die Patenterteilung:
**11.10.2017 Patentblatt 2017/41**

(51) Int Cl.:
*F04D 29/32* *(2006.01)*   *F04D 29/54* *(2006.01)*
*F01D 5/14* *(2006.01)*

(21) Anmeldenummer: **15181650.1**

(22) Anmeldetag: **20.08.2015**

(54) **GASTURBINEN-AXIALVERDICHTER**

GAS TURBINE AXIAL COMPRESSOR

COMPRESSEUR AXIAL DE TURBINE A GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.01.2015 EP 15152865**

(43) Veröffentlichungstag der Anmeldung:
**03.08.2016 Patentblatt 2016/31**

(73) Patentinhaber: **MTU Aero Engines AG**
**80995 München (DE)**

(72) Erfinder:
• **Froebel, Tobias**
  **85635 Siegertsbrunn (DE)**
• **Mann, Sebastian**
  **85567 Grafing bei München (DE)**
• **Wolfrum, Nina**
  **85622 Feldkirchen (DE)**
• **Elorza Gomez, Sergio**
  **80997 München (DE)**

(56) Entgegenhaltungen:
**EP-A1- 2 133 573        EP-A2- 1 865 148**
**US-A1- 2011 286 850**

EP 3 051 142 B1

**Beschreibung**

Die Arbeiten, die zu dieser Erfindung geführt haben, wurden gemäß der Finanzhilfevereinbarung Nr. 283216 (LEMCOTEC), im Zuge des Siebten Rahmenprogramms der Europäischen Union (FP7/2007-2013) gefördert.

Die vorliegende Erfindung betrifft einen Axialverdichter für eine Gasturbine, eine Gasturbine mit dem Axialverdichter sowie ein Flugtriebwerk mit der Gasturbine.

Lauf- und Leitschaufeln von Gasturbinen-Axialverdichtern (siehe z. B. US 2011/0286850 A) weisen ein in einem Strömungskanal des Axialverdichters angeordnetes Schaufelblatt zur Strömungsumlenkung mit einer Vorderkante und einer Hinterkante auf, die durch eine Druck- und eine Saugseite miteinander verbunden sind.

Zwischen einer Schaufelspitze einer Schaufel und der ihr radial gegenüberliegenden Kanalwand des Strömungskanals ist aufgrund der Relativrotation regelmäßig ein (Radial)Spalt vorhanden, durch den eine von der Schaufel umgelenkte Strömung nachteilig gestört wird.

Dieser Spalt kann sich verändern. Insbesondere kann er über der Betriebszeit des Axialverdichters oder - aufgrund der reduzierten Fliehkraft - bei niedrigeren Drehzahlen zunehmen.

Nachteilig vergrößert diese Spaltzunahme die durch den Spalt induzierte Störung und verschlechtert so eine (aerodynamische) Performance der Schaufel und damit des Axialverdichters, insbesondere ihren bzw. seinen Wirkungsgrad, und/oder seinen Pumpgrenzabstand bzw. seine (Pump)Stabilität. Ein verschlechterter Pumpgrenzabstand muss bei der Auslegung vorgehalten werden und führt wiederum zu einer (weiteren) Verschlechterung des Wirkungsgrads.

Es ist daher wünschenswert, die Verschlechterung der Performance und/oder (Pump)Stabilität bei größeren bzw. größer werdenden Spalten bzw. die Spaltsensitivität zu reduzieren.

Eine Aufgabe einer Ausführung der vorliegenden Erfindung ist es, eine Gasturbine zu verbessern.

Diese Aufgabe wird durch einen Axialverdichter mit den Merkmalen des Anspruchs 1 gelöst. Anspruch 5 stellt eine Gasturbine mit einem hier beschriebenen Axialverdichter unter Schutz, Anspruch 6 ein Flugtriebwerk mit einer solchen Gasturbine. Vorteilhafte Ausführungsformen der Erfindung sind Gegenstand der Unteransprüche.

Nach einer Ausführung der vorliegenden Erfindung weisen eine oder mehrere Schaufeln, insbesondere eine oder mehrere mit einem Rotor des Axialverdichters drehbare bzw. an einem Rotor des Axialverdichters befestigbare, insbesondere befestigte, insbesondere mit dem Rotor integral ausgebildete, Laufschaufeln wenigstens eines Laufgitters, insbesondere eines stromaufwärtigsten, eines stromabwärtigsten und/oder wenigstens eines zwischen dem stromauf- und stromabwärtigsten Laufgitter angeordneten Laufgitters, und/oder eine oder mehrere gehäusefeste Leitschaufeln wenigstens eines Leitgitters, insbesondere eines stromaufwärtigsten, eines stromabwärtigsten und/oder wenigstens eines zwischen dem stromauf- und stromabwärtigsten Leitgitter angeordneten Leitgitters, wenigstens eines Axialverdichters für eine Gasturbine, insbesondere eines Flugtriebwerks, insbesondere eines stromaufwärtigsten bzw. gasturbineneinlassnächsten bzw. Niederdruckverdichters, eines stromabwärtigsten bzw. gasturbinenbrennkammernächsten bzw. Hochdruckverdichters und/oder eines zwischen Nieder- und Hochdruckverdichter angeordneten mittleren bzw. Mitteldruckverdichters, insbesondere eine oder mehrere mit einem Rotor des Axialverdichters drehbare bzw. an einem Rotor des Axialverdichters befestigbare, insbesondere befestigte, insbesondere mit dem Rotor integral ausgebildete, Laufschaufeln wenigstens eines Laufgitters, insbesondere eines stromaufwärtigsten, eines stromabwärtigsten und/oder wenigstens eines zwischen dem stromauf- und stromabwärtigsten Laufgitter angeordneten Laufgitters, und/oder eine oder mehrere gehäusefeste Leitschaufeln wenigstens eines Leitgitters, insbesondere eines stromaufwärtigsten, eines stromabwärtigsten und/oder wenigstens eines zwischen dem stromauf- und stromabwärtigsten Leitgitter angeordneten Leitgitters, wenigstens eines Axialverdichters einer Gasturbine, insbesondere eines Flugtriebwerks, insbesondere eines stromaufwärtigsten bzw. gasturbineneinlassnächsten bzw. Niederdruckverdichters, eines stromabwärtigsten bzw. gasturbinenbrennkammernächsten bzw. Hochdruckverdichters und/oder eines zwischen Nieder- und Hochdruckverdichter angeordneten mittleren bzw. Mitteldruckverdichters, jeweils ein in einem Strömungskanal angeordnetes Schaufelblatt zur Strömungsumlenkung mit einer Vorderkante und eine Hinterkante auf, die durch eine Druck- und eine Saugseite miteinander verbunden sind, wobei

in jedem Profilschnitt des Schaufelblattes (wenigstens) in einem Bereich zwischen (höchstens) 5%, insbesondere 0%, und (wenigstens) 95%, insbesondere 100%, einer radialen Schaufelblatthöhe von einem Schaufelblattfuß zu einer Schaufel(blatt)spitze:

- die Profilmittellinie höchstens zwei Wendepunkte, insbesondere höchstens einen, insbesondere keinen, Wendepunkt aufweist;
- der Metallwinkel an der Vorderkante $\alpha_{le}$ in einem Bereich zwischen (+)20° und (+)75° liegt;
- der Metallwinkel an der Hinterkante $\alpha_{te}$ in einem Bereich zwischen -20° und (+)70° liegt und höchstens gleich dem, insbesondere kleiner als der, Metallwinkel an der Vorderkante $\alpha_{le}$ ist;
- der Staffelungswinkel $\beta$ in einem Bereich zwischen 0° und (+)70°, insbesondere zwischen (+)10° und (+)70°, liegt;

und wobei

ein absolutes, insbesondere das einzige lokale, Minimum $\lambda_{min}$ eines Frontbelastungswinkels $\lambda$, der gleich der Differenz aus dem arithmetischen Mittel $\frac{\alpha_{le} + \alpha_{te}}{2}$ der Metallwinkel an der Vorder- und Hinterkante $\alpha_{le}$, $\alpha_{te}$ als Minuend und dem Staffelungswinkel $\beta$ als Subtrahend bzw. gleich $\frac{\alpha_{le} + \alpha_{te}}{2} - \beta$ ist, in einem Bereich zwischen (wenigstens) 55%, insbesondere 60%, und (höchstens) 85%, insbesondere 80%, der radialen Schaufelblatthöhe liegt; und ein lokales oder absolutes Maximum $\lambda_{max}$ des Frontbelastungswinkels in einem Bereich zwischen 95% und 100% der radialen Schaufelblatthöhe, insbesondere an einer Schaufelspitze bzw. bei 100% der radialen Schaufelblatthöhe, liegt.

Das Schaufelblatt ist in einer Ausführung in fachüblicher Weise, insbesondere durch entlang einer, insbesondere gekrümmten oder geraden und mit der Radialrichtung des Verdichters fluchtenden oder gegen die Radialrichtung des Verdichters geneigten, Fädelachse übereinander angeordnete Schaufelblattprofilschnitte bzw. Profilschnitte bzw. Profile des Schaufelblatts, definiert bzw. gebildet.

Ein (Schaufelblatt)Profilschnitt bzw. Profil im Sinne der vorliegenden Erfindung ist in einer Ausführung entsprechend in fachüblicher Weise ein Schnitt einer zur Rotationsachse des Verdichters konzentrischen Zylinderfläche oder einer zwischen den naben- und gehäuseseitigen Endflächen interpolierten Kegelfläche mit dem Schaufelblatt oder eine ebene Abwicklung oder Projektion hiervon.

Die Vorderkante ist in einer Ausführung die Verbindungslinie der axial vordersten bzw. stromaufwärtigsten Punkte der entlang der Fädelachse übereinander angeordneten Schaufelblattprofilschnitte und/oder der axial vorderen bzw. stromaufwärtigen Schnitt- bzw. Verbindungspunkte der Druck- und Saugseite des Schaufelblattes.

Die Hinterkante ist in einer Ausführung die Verbindungslinie der axial hintersten bzw. stromabwärtigsten Punkte der entlang der Fädelachse übereinander angeordneten Schaufelblattprofilschnitte und/oder der axial hinteren bzw. stromabwärtigen Schnitt- bzw. Verbindungspunkte der Druck- und Saugseite des Schaufelblattes.

Das Schaufelblatt weist eine maximale radiale Erstreckung bzw. radiale Schaufelblatthöhe H von einem Schaufelblattfuß bis zu einer Schaufelspitze auf. Die Schaufelblatthöhe ist somit von dem Schaufelblattfuß zu der Schaufelspitze hin gerichtet, so dass beispielsweise 25% der radialen Schaufelblatthöhe schaufelblattfußnäher als 50% der radialen Schaufelblatthöhe und 75% der radialen Schaufelblatthöhe schaufelspitzennäher als 50% der radialen Schaufelblatthöhe sind.

In einer Ausführung ist die Schaufel eine (außen)deckbandlose Schaufel. In einer Ausführung ist die Schaufelblattspitze die Schaufelspitze.

Ist die Schaufel eine Laufschaufel, so weist das Schaufelblatt eine radiale Schaufelblatthöhe H von einem rotor- bzw. nabenseitigen Schaufelblattfuß, insbesondere einem rotor- bzw. nabennächsten bzw. radial innersten Schaufelblattprofilschnitt, bis zu einer radial äußeren Schaufelspitze, insbesondere einem radial äußersten Schaufelblattprofilschnitt, auf, so dass ein radial innerster Schaufelblattprofilschnitt in radialer Richtung bei 0% der radialen Schaufelblatthöhe H bzw. 0·H liegt bzw. das Schaufelblatt beginnt und ein radial äußerster Schaufelblattprofilschnitt bzw. die Schaufelspitze bei 100% der radialen Schaufelblatthöhe H bzw. 1·H liegt bzw. das Schaufelblatt endet.

Ist die Schaufel eine Leitschaufel, so weist das Schaufelblatt eine radiale Schaufelblatthöhe H von einem gehäuseseitigen Schaufelblattfuß, insbesondere einem gehäusenächsten bzw. radial äußersten Schaufelblattprofilschnitt, bis zu einer radial inneren Schaufelspitze, insbesondere einem radial innersten Schaufelblattprofilschnitt, auf, so dass ein radial äußerster Schaufelblattprofilschnitt in radialer Richtung bei 0% der radialen Schaufelblatthöhe H bzw. 0·H liegt bzw. das Schaufelblatt beginnt und ein radial innerster Schaufelblattprofilschnitt bzw. die Schaufelspitze bei 100% der radialen Schaufelblatthöhe H bzw. 1·H liegt bzw. das Schaufelblatt endet.

Die Profilmittel- bzw. Skelettlinie ist in einer Ausführung in fachüblicher Weise diejenige Linie, die mit gleichem Abstand zu Druck- und Saugseite des jeweiligen Schaufelblattprofilschnitts zwischen diesen verläuft. Sie geht entsprechend durch die Vorderkante und Hinterkante.

Ein Wendepunkt ist in einer Ausführung in fachüblicher Weise ein Punkt (der Profilmittel- bzw. Skelettlinie), an dem eine Krümmung der Profilmittel- bzw. Skelettlinie ihr Vorzeichen wechselt bzw. ein konvex gekrümmter in einen konkav gekrümmten Abschnitt der Profilmittel- bzw. Skelettlinie oder ein konkav gekrümmter in einen konvex gekrümmten Abschnitt der Profilmittel- bzw. Skelettlinie übergeht.

Der Metallwinkel an der Vorderkante $\alpha_{le}$ ist in einer Ausführung in fachüblicher Weise der Winkel von einem zur Rotationsachse des Verdichters parallelen und in axialer Richtung in Durchströmungsrichtung bzw. in Richtung von der Vorder- zu der Hinterkante hin gerichteten Vektor zu einem zu der Tangente in der Vorderkante an die Profilmittellinie des jeweiligen Schaufelblattprofilschnitts parallelen und in axialer Richtung in Durchströmungsrichtung bzw. in Richtung von der Vorder- zu der Hinterkante hin gerichteten Vektor, wobei der Winkel bei Laufschaufeln entgegen der Richtung der (regulären) Umfangsgeschwindigkeit des Verdichters und bei Leitschaufeln in Richtung der (regulären) Umfangsgeschwindigkeit des Verdichters positiv definiert ist bzw. zählt. Er wird in der Literatur auch als Profileintrittswinkel bezeichnet.

Der Metallwinkel an der Hinterkante $\alpha_{le}$ ist in einer Ausführung in fachüblicher Weise der Winkel von einem zur Rotationsachse des Verdichters parallelen und in axialer Richtung in Durchströmungsrichtung bzw. in Richtung von der Vorder- zu der Hinterkante hin gerichteten Vektor zu einem zu der Tangente in der Hinterkante an die Profilmittellinie des jeweiligen Schaufelblattprofilschnitts parallelen und in axialer Richtung in Durchströmungsrichtung bzw. in Richtung von der Vorder- zu der Hinterkante hin gerichteten Vektor, wobei der Winkel bei Laufschaufeln entgegen der Richtung der (regulären) Umfangsgeschwindigkeit des Verdichters und bei Leitschaufeln in Richtung der (regulären) Umfangsgeschwindigkeit des Verdichters positiv definiert ist. Er wird in der Literatur auch als Profilaustrittswinkel bezeichnet.

Der Staffelungswinkel $\beta$ ist in einer Ausführung in fachüblicher Weise der Winkel von einem zur Rotationsachse des Verdichters parallelen und in axialer Richtung in Durchströmungsrichtung bzw. in Richtung von der Vorder- zu der Hinterkante hin gerichteten Vektor zu einem zu der Verbindungsgeraden durch Vorder- und Hinterkante in dem jeweiligen Schaufelblattprofilschnitt parallelen und in axialer Richtung in Durchströmungsrichtung bzw. in Richtung von der Vorder- zu der Hinterkante hin gerichteten Vektor, wobei der Winkel bei Laufschaufeln entgegen der Richtung der (regulären) Umfangsgeschwindigkeit des Verdichters und bei Leitschaufeln in Richtung der (regulären) Umfangsgeschwindigkeit des Verdichters positiv definiert ist.

Somit sind bei einer Laufschaufel die Tangenten in der Vorderkante an die Profilmittellinie und die Verbindungsgeraden durch Vorder- und Hinterkante jeweils entgegen der Umfangsgeschwindigkeitsrichtung geneigt bzw. gehen bei positivem Metall- bzw. Staffelungswinkel aus der Rotationsachse durch Drehung gegen die Umfangsgeschwindigkeitsrichtung hervor (bei Blickrichtung von radial außen nach innen und in Durchströmungsrichtung).

Bei einer Leitschaufel sind umgekehrt die Tangenten in der Vorderkante an die Profilmittellinie und die Verbindungsgeraden durch Vorder- und Hinterkante jeweils in Richtung der Umfangsgeschwindigkeitsrichtung des Verdichters geneigt bzw. gehen aus der Rotationsachse durch Drehung in Umfangsgeschwindigkeitsrichtung des Verdichters hervor (bei Blickrichtung von radial außen nach innen und in Durchströmungsrichtung) .

Es hat sich herausgestellt, dass ein Winkel $\lambda$, der gleich der Differenz aus dem arithmetischen Mittel

$$\frac{\alpha_{le} + \alpha_{te}}{2}$$

der Metallwinkel $\alpha_{le}$, $\alpha_{te}$ an der Vorder- und Hinterkante als Minuend und dem Staffelungswinkel $\beta$ als Subtrahend bzw. gemäß

$$\lambda = \frac{\alpha_{le} + \alpha_{te}}{2} - \beta$$

definiert ist, beeinflusst, wo der jeweilige Schaufelblattprofilschnitt mehr Belastung erfährt bzw. (auf) die durch ihn umgelenkte Strömung einwirkt: größere Werte entsprechen einer frontlastigeren Belastungsverteilung, kleinere Werte einer hinterkantennäheren Belastungsverteilung. Er wird daher vorliegend als Frontbelastungswinkel $\lambda$ bezeichnet.

Dabei hat sich überraschend herausgestellt, dass durch die anspruchsgemäße Verortung eines lokalen oder des absoluten Maximums $\lambda_{max}$ des Frontbelastungswinkels $\lambda$ in der Nähe oder an der Schaufelspitze in Kombination mit der anspruchsgemäßen Verortung des absoluten Minimums $\lambda_{min}$ innerhalb der schaufelspitzennäheren Hälfte der Schaufelblatthöhe unterhalb dieses Maximums eine Verschlechterung der Performance des Axialverdichters, insbesondere des Wirkungsgrads der entsprechenden Schaufel(n) und damit auch des Axialverdichters, und/oder des Pumpgrenzabstands des Axialverdichters bzw. seiner (Pump)Stabilität, bei größeren bzw. größer werdenden Spalten bzw. die Spaltsensitivität des Axialverdichters vorteilhaft reduzieren.

Entsprechend kann durch diese Kombination insbesondere bei größeren bzw. größer werdenden Spalten eine bessere Performance, insbesondere ein besserer bzw. höherer Wirkungsgrad, und/oder ein besserer bzw. größerer Pumpgrenzabstand erreicht werden. Dadurch können in einer Ausführung vorteilhaft höhere Seitenverhältnisse (HAR) ohne oder mit geringen Einbußen an (Pump)Stabilität erreicht werden.

Diesbezüglich wird angenommen, dass die durch die anspruchsgemäße Verortung eines lokalen oder des absoluten Maximums des Frontbelastungswinkels in der Nähe der Schaufelspitze bewirkte frontlastigere Belastungsverteilung in diesem Bereich in Kombination mit der durch die anspruchsgemäße Verortung des absoluten Minimums des Frontbelastungswinkels bewirkte hinterkantennähere Belastungsverteilung in diesem Bereich vorteilhaft die Zunahme der Störung der Strömung durch den Spalt zwischen Schaufelspitze und Kanalwand bei größer werdenden Spalten reduzieren.

Es hat sich weiter überraschend herausgestellt, dass dieser positive Effekt besonderes bei Schaufelblättern wirksam ist, deren Metall- und Staffelungswinkel - wenigstens im Wesentlichen - über ihre gesamte radiale Schaufelblatthöhe in den anspruchsgemäßen Bereichen liegen und deren Profilmittellinien dort jeweils höchstens zwei Wendepunkte aufweisen.

Dabei kann bereits eine anspruchsgemäße Gestaltung einer oder mehrerer Lauf-und/oder Leitschaufeln einer oder mehrerer Stufen des Axialverdichters eine Verschlechterung seiner Performance und/oder seines Pumpgrenzabstandes bei größeren bzw. größer werdenden Spalten bzw. seine Spaltsensitivität vorteilhaft reduzieren, wobei insbesondere eine anspruchsgemäße Gestaltung aller Lauf- und/oder aller Leitschaufeln einer oder mehrerer Stufen des Axialverdichters eine Verschlechterung seiner Performance und/oder seines Pumpgrenzabstandes bei größeren bzw. größer werdenden Spalten bzw. seine Spaltsensitivität besonders vorteilhaft reduzieren kann.

In einer Weiterbildung nimmt der Frontbelastungswinkel $\lambda$ in radialer Richtung in einem Bereich zwischen (wenigstens) 50%, insbesondere 40 %, der radialen Schaufelblatthöhe H und dem absoluten Minimum $\lambda_{min}$ des Frontbelastungswinkels $\lambda$ monoton ab, insbesondere streng monoton ab.

Mit anderen Worten gilt in einer Ausführung in dem genannten Bereich der radialen Schaufelblatthöhe: $x_2 > x_1 \Rightarrow \lambda(x_2) \leq \lambda(x_1)$ (monoton) bzw. $\lambda(x_2) < \lambda(x_1)$ (streng monoton), wobei x den Abstand in radialer Richtung von dem Schaufelblattfuß bezeichnet.

Zusätzlich oder alternativ nimmt in einer Weiterbildung der Frontbelastungswinkel in radialer Richtung von dem absoluten Minimum des Frontbelastungswinkels aus bis zu einem schaufelspitzennächsten, insbesondere dem absoluten, Maximum des Frontbelastungswinkels monoton zu, insbesondere streng monoton zu. Ein schaufelspitzennächstes (lokales oder absolutes) Maximum kann insbesondere auch an bzw. in der Schaufelspitze selber liegen.

Mit anderen Worten gilt in einer Ausführung zwischen dem absoluten Minimum des Frontbelastungswinkels und dem schaufelspitzennächsten, insbesondere absoluten, Maximum des Frontbelastungswinkels: $x_2 > x_1 \Rightarrow \lambda(x_2) \geq \lambda(x_1)$ (monoton) bzw. $\lambda(x_2) > \lambda(x_1)$ (streng monoton), wobei x wiederum den Abstand in radialer Richtung von dem Schaufelblattfuß bezeichnet.

In einer Ausführung ist ein schaufelspitzennächstes, insbesondere das absolute, Maximum $\lambda_{max}$ des Frontbelastungswinkels größer als ein arithmetischer Mittelwert des Frontbelastungswinkels über einem Bereich von 0% bis 40%, insbesondere 0% bis 50%, der radialen Schaufelblatthöhe H. Bezeichnet x wieder den radialen Abstand zum Schaufelblattfuß, so gilt mit anderen Worten

$$\lambda_{max} > \frac{1}{X_0}\int_0^{X_0}\lambda(x)dx; \quad X_0 = 0{,}4 / 0{,}5 \cdot H$$

Es hat sich überraschend herausgestellt, dass ein solcher (streng) monotoner Verlauf in den anspruchsgemäßen Bereichen sowie ein anspruchsgemäßes Verhältnis von schaufelspitzennächstem, insbesondere absolutem, Maximum zum arithmetischen Mittelwert in dem anspruchsgemäßen Bereich eine Verschlechterung der Performance und/oder des Pumpgrenzabstandes eines Axialverdichters bei größeren bzw. größer werdenden Spalten bzw. seine Spaltsensitivität jeweils für sich, insbesondere aber in Kombination miteinander besonders vorteilhaft reduzieren.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:

Fig. 1     einen Profilschnitt eines Schaufelblatts einer Schaufel eines Axialverdichters einer Gasturbine eines Flugtriebwerks nach einer Ausführung der vorliegenden Erfindung;

Fig. 2     einen Verlauf des Frontbelastungswinkels $\lambda$ über der radialen Schaufelblatthöhe; und

Fig. 3     einen Pumpgrenzabstand über einer Spalthöhe für einen erfindungsgemäßen und einen herkömmlichen Axialverdichter.

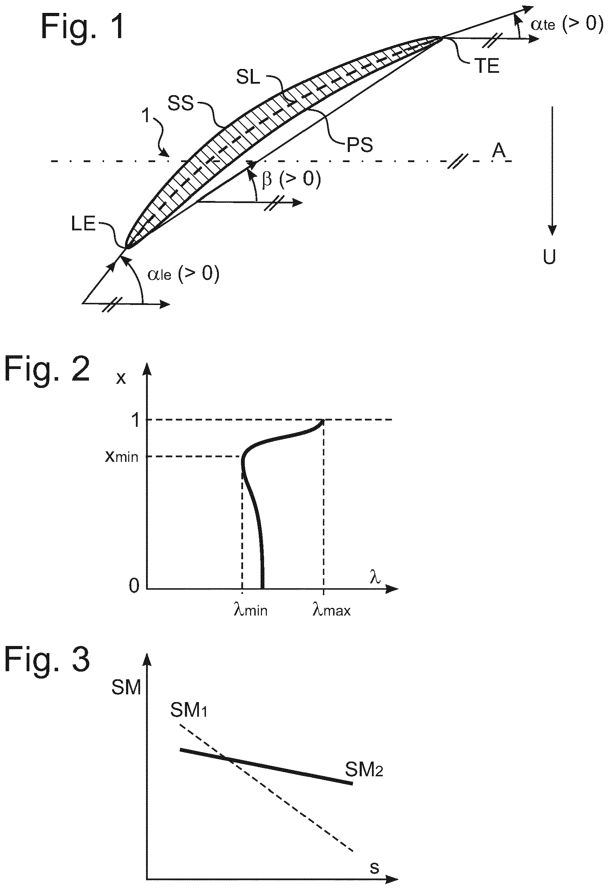

Fig. 1 zeigt einen Profilschnitt eines Schaufelblatts 1 einer Laufschaufel eines Axialverdichters einer Gasturbine eines Flugtriebwerks nach einer Ausführung der vorliegenden Erfindung.

Das Schaufelblatt 1 weist eine Vorderkante LE und eine Hinterkante TE auf, die durch eine Druckseite PS und eine Saugseite SS miteinander verbunden sind.

In Fig. 1 ist der Metallwinkel an der Vorderkante $\alpha_{le}$, der Metallwinkel an der Hinterkante $\alpha_{te}$, der Staffelungswinkel $\beta$, strichpunktiert die Rotationsachse A des Axialverdichters und gestrichelt die Profilmittellinie SL eingezeichnet.

Wie auch in allen anderen Profilschnitten des Schaufelblattes 1 zwischen einem Schaufelblattfuß und einer Schaufelspitze weist die Profilmittellinie SL höchstens zwei Wendepunkte (im Profilschnitt der Fig. 1 keinen Wendepunkt) auf, liegt der Metallwinkel an der Vorderkante $\alpha_{le}$ in einem Bereich zwischen 20° und 75°, der höchstens gleiche Metallwinkel an der Hinterkante $\alpha_{te}$ in einem Bereich zwischen -20° und 70° sowie der Staffelungswinkel $\beta$ in einem Bereich zwischen 0° und 70°.

Dabei wäre der zu der Tangente in der Hinterkante an die Profilmittellinie parallele und in axialer Richtung in Durchströmungsrichtung gerichtete Vektor bei einem negativen Metallwinkel an der Hinterkante $\alpha_{te} < 0$ in Fig. 1 von links oben nach rechts unten orientiert.

Fig. 2 zeigt einen Verlauf des anspruchsgemäß definierten Frontbelastungswinkels $\lambda$ über der radialen Schaufelblatthöhe H, wobei x den Abstand zum Schaufelblattfuß bezogen auf die Schaufelblatthöhe bezeichnet. Somit entspricht x = 0 einer radialen Position auf Höhe des Schaufelblattfußes, bei einer Laufschaufel also radial ganz innen bzw. am Beginn des Schaufelblattes, x = 1 entsprechend einer radialen Position auf Höhe der Schaufelspitze, bei einer Laufschaufel also radial ganz außen bzw. an der Spitze des Schaufelblattes.

Man erkennt in Fig. 2, dass das absolute Minimum $\lambda_{min}$ des Frontbelastungswinkels in einem Bereich zwischen 60% und 80% der radialen Schaufelblatthöhe liegt ($\lambda(x_{min}) = \lambda_{min} < \lambda(x)$ für alle $x \neq x_{min}$, $x_{min} \in [0{,}6; 0{,}8]$).

Man erkennt in Fig. 2 weiter, dass das absolute

Maximum $\lambda_{max}$ des Frontbelastungswinkels an der Schaufelspitze liegt ($\lambda(x=1) = \lambda_{max} > \lambda(x)$ für alle $x < 1$).

Man erkennt in Fig. 2 weiter, dass der Frontbelastungswinkel $\lambda$ in radialer Richtung von dem Schaufelblattfuß aus bis zu dem absoluten Minimum des Frontbelastungswinkels monoton abnimmt, im Bereich zwischen 50% der radialen Schaufelblatthöhe und dem absoluten Minimum des Frontbelastungswinkels sogar streng monoton abnimmt, und von dem absoluten Minimum $\lambda_{min}$ des Frontbelastungswinkels aus bis zu der Schaufelspitze bzw. dem schaufelspitzennächsten, absoluten Maximum $\lambda_{max}$ streng monoton zunimmt.

Das absolute Maximum $\lambda_{max}$ des Frontbelastungswinkels ist größer als der arithmetische Mittelwert des Frontbelastungswinkels über einem Bereich von 0% bis 50% der radialen Schaufelblatthöhe.

Fig. 3 zeigt dünn und gestrichelt den Verlauf eines Pumpgrenzabstands ("surge margin") $SM_1$ eines herkömmlichen Axialverdichters sowie fett und ausgezogen den Verlauf des Pumpgrenzabstands $SM_2$ eines Axialverdichters nach einer Ausführung der vorliegenden Erfindung jeweils über einer radialen Spalthöhe s eines Radialspaltes einer seiner Schaufeln.

Man erkennt, dass der Pumpgrenzabstand $SM_2$ des erfindungsgemäßen Axialverdichters sich bei größer werdender Spalthöhe (nach rechts in Fig. 3) vorteilhaft weniger reduziert (in Fig. 3 sinkt) bzw. verschlechtert als bei dem herkömmlichen Axialverdichter. Dadurch kann der erfindungsgemäße Axialverdichter in Hinblick auf die Spaltvergrößerung für einen größeren Pumpgrenzabstand ausgelegt und so sein Wirkungsgrad verbessert werden. Ein zu Fig. 3 qualitativ ähnliches Bild ergibt sich auch für den Vergleich der Wirkungsgrade der jeweiligen Schaufel bzw. des Verdichters über der Spalthöhe.

Man erkennt zudem in Fig. 3, dass der dargestellte Pumpgrenzabstand $SM_2$ des Axialverdichters nach einer Ausführung der vorliegenden Erfindung zwar bei kleineren Spalthöhen (links in Fig. 3) kleiner als bei dem herkömmlichen Axialverdichter ist.

Dies kann jedoch in Kauf genommen werden, insbesondere, wenn tatsächliche Spalthöhen im Bereich rechts des Schnittpunktes der beiden Verläufe $SM_1$, $SM_2$ liegen.

Zur Verdeutlichung der hier gebrauchten fachüblichen Definition der Metall- und des Staffelungswinkels sind in Fig. 1 die reguläre Umfangsgeschwindigkeitsrichtung U des Verdichters als vertikaler Pfeil von oben nach unten, zur Rotationsachse A des Verdichters parallele und in axialer Richtung in Durchströmungsrichtung (von links nach rechts in Fig. 1) bzw. in Richtung von der Vorder- zu der Hinterkante hin gerichtete Vektoren, zu den Tangenten in der Vorder- und Hinterkante an die Profilmittellinie parallele und in axialer Richtung ebenfalls in Durchströmungsrichtung gerichtete Vektoren, ein zur Verbindungsgeraden durch Vorder- und Hinterkante paralleler und in axialer Richtung ebenfalls in Durchströmungsrichtung gerichteter Vektor, sowie die entgegen der Richtung der Umfangsgeschwindigkeit des Verdichters positiv definierten bzw. zählenden Winkel $\alpha_{le}$, $\alpha_{te}$, und $\beta$ angedeutet.

Man erkennt, dass die Tangenten in der Vorder- und Hinterkante an die Profilmittellinie und die Verbindungsgerade durch Vorder- und Hinterkante jeweils entgegen der Umfangsgeschwindigkeitsrichtung geneigt sind bzw. aus der Rotationsachse A durch Drehung gegen die Umfangsgeschwindigkeitsrichtung hervorgehen (bei Blickrichtung von radial außen nach innen und in Durchströmungsrichtung von links nach rechts in Fig. 1 also entgegen dem Uhrzeigersinn).

Zudem erkennt man, dass sich auch bei Spiegelung der Darstellung der Fig. 1 an der Rotationsachse A, d.h. bei einem Verdichter mit gegensinniger regulärer Umfangsgeschwindigkeitsrichtung jeweils Laufschaufeln mit positivem Staffelungswinkel und Metallwinkel an der Vorderkante $\alpha_{le}$ ergeben.

Weiter erkennt man, dass sich bei Spiegelung des Profilschnitts der Fig. 1 an der Rotationsachse A bei gleichbleibender regulärer Umfangsgeschwindigkeitsrichtung eine Leitschaufel mit positivem Staffelungswinkel und Metallwinkel an der Vorderkante $\alpha_{le}$ ergibt.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

Bezugszeichenliste

| | |
|---|---|
| 1 | Schaufelblatt |
| $\alpha_{le}$ | Metallwinkel an der Vorderkante |
| $\alpha_{te}$ | Metallwinkel an der Hinterkante |
| $\beta$ | Staffelungswinkel |
| $\lambda_{(min/max)}$ | (absolutes Minimum/Maximum des) Frontbelastungswinkel(s) |
| A | Rotationsachse |
| LE | Vorderkante |
| TE | Hinterkante |
| PS | Druckseite |
| s | Spalthöhe |
| SL | Profilmittellinie |
| $SM_{(1/2)}$ | Pumpgrenzabstand |
| SS | Saugseite |
| U | Umfangsgeschwindigkeitsrichtung |

x    radialer Abstand zum Schaufelblattfuß

**Patentansprüche**

1. Axialverdichter für eine Gasturbine, insbesondere eines Flugtriebwerks, mit wenigstens einer Lauf- oder Leitschaufel mit einem Schaufelblatt (1), das in einem Strömungskanal angeordnet ist und eine Vorderkante (LE) und eine Hinterkante (TE) aufweist, die durch eine Druck- und eine Saugseite (PS, SS) miteinander verbunden sind, wobei
in jedem Profilschnitt des Schaufelblattes in einem Bereich zwischen 5% und 95% einer radialen Schaufelblatthöhe von einem Schaufelblattfuß zu einer Schaufelspitze
die Profilmittellinie (SL) höchstens zwei Wendepunkte aufweist;
der Metallwinkel an der Vorderkante ($\alpha_{le}$) in einem Bereich zwischen 20° und 75° liegt;
der Metallwinkel an der Hinterkante ($\alpha_{te}$) in einem Bereich zwischen -20° und 70° liegt und höchstens gleich dem Metallwinkel an der Vorderkante ist; und
der Staffelungswinkel ($\beta$) in einem Bereich zwischen 0° und 70° liegt;
und wobei
ein lokales oder absolutes Minimum ($\lambda_{min}$) eines Frontbelastungswinkels ($\lambda$), der gleich der Differenz aus dem arithmetischen Mittel der Metallwinkel an der Vorder- und Hinterkante als Minuend und dem Staffelungswinkel als Subtrahend ist

$$( \lambda = \frac{\alpha_{le} + \alpha_{te}}{2} - \beta )$$, in einem Bereich zwischen 55% und 85% der radialen Schaufelblatthöhe liegt; und
ein lokales oder absolutes Maximum ($\lambda_{max}$) des Frontbelastungswinkels in einem Bereich zwischen 95% und 100% der radialen Schaufelblatthöhe, insbesondere an einer Schaufelspitze, liegt.

2. Axialverdichter nach dem vorhergehenden Anspruch, **dadurch gekennzeichnet, dass** der Frontbelastungswinkel ($\lambda$) in radialer Richtung in einem Bereich zwischen 50% der radialen Schaufelblatthöhe und dem absoluten Minimum des Frontbelastungswinkels, insbesondere streng, monoton abnimmt.

3. Axialverdichter nach einem der vorhergehenden Ansprüche, **dadurch gekennzeichnet, dass** der Frontbelastungswinkel ($\lambda$) in radialer Richtung von dem absoluten Minimum des Frontbelastungswinkels bis zu einem, insbesondere schaufelspitzennächsten, Maximum des Frontbelastungswinkels, insbesondere streng, monoton zunimmt.

4. Axialverdichter nach einem der vorhergehenden Ansprüche, **dadurch gekennzeichnet, dass** ein schaufelspitzennächstes Maximum des Frontbelastungswinkels größer als der arithmetische Mittelwert des Frontbelastungswinkels über einem Bereich von 0% bis 40% der radialen Schaufelblatthöhe ist.

5. Gasturbine mit einem, insbesondere stromaufwärtigsten, stromabwärtigsten oder mittleren, ein- oder mehrstufigen, Axialverdichter nach einem der vorhergehenden Ansprüche.

6. Flugtriebwerk mit einer Gasturbine nach dem vorhergehenden Anspruch.

**Claims**

1. Axial compressor for a gas turbine, particularly an aircraft engine, having at least one rotor or guide blade with a blade leaf (1) which is arranged in a flow channel and comprises a leading edge (LE) and a trailing edge (TE) which are connected to one another by a pressure side and a suction side (PS, SS), wherein
the profile centerline (SL) has no more than two pivot points in each profile section of the blade leaf in an area between 5% and 95% of a radial blade leaf height from a blade leaf base to a blade leaf tip;
wherein the metal angle at the leading edge ($\alpha_{le}$) lies in an area between 20° and 75°; wherein the metal angle at the trailing edge ($\alpha_{le}$) lies in an area between 20° and 70° and is no more than equal to the metal angle at the leading edge; and wherein the stagger angle ($\beta$) lies in an area between 0° and 70°;
and wherein
a local or absolute minimum ($\lambda_{min}$) of a front load angle ($\lambda$), which is equal to the difference between the arithmetic mean of the metal angles at the leading and trailing edge as minuend and the stagger angle

as subtrahend $( \lambda = \frac{\alpha_{le} + \alpha_{te}}{2} - \beta )$ lies in an area between 55% and 85% of the radial blade leaf height; and
a local or absolute maximum ($\lambda_{max}$) of a front load angle ($\lambda$) lies in an area between 95% and 100% of the radial blade leaf height, particularly at a blade leaf tip.

2. Axial compressor according to the previous claim, **characterized in that** the front load angle ($\lambda$) decreases, particularly strictly monotonically in radial direction in an area between 50% of the radial blade leaf height and the absolute minimum of the front load angle.

**3.** Axial compressor according to one of the previous claim, **characterized in that** the front load angle ($\lambda$) increases, particularly strictly monotonically in radial direction from the absolute minimum of the front load angle to a maximum of the front load angle which is particularly closest to the blade tip.

**4.** Axial compressor according to one of the previous claim, **characterized in that** a maximum of the front load angle closest to the blade tip is greater than the arithmetic mean of the front load angle over an area of 0% to 40% of the radial blade leaf height.

**5.** Gas turbine having a particularly most upstream, most downstream, or middle, single-stage or multi-stage axial compressor according to one of the previous claims.

**6.** Aircraft engine having a gas turbine according to the previous claim.

**Revendications**

**1.** Compresseur axial pour une turbine à gaz, en particulier d'un groupe motopropulseur, avec au moins une aube directrice ou mobile ayant une pale (1), qui est agencée dans un canal d'écoulement et présente un bord d'attaque (LE) et un bord de fuite (TE), qui sont reliés l'un à l'autre par un intrados et un extrados (PS, SS), dans lequel ;

dans chaque section de profil de la pale dans une zone comprise entre 5 % et 95 % d'une hauteur de pale radiale d'une emplanture de pale à une pointe de pale,
la ligne médiane (SL) du profil présente au maximum deux points d'inflexion;
l'angle métallique sur le bord d'attaque ($\alpha_{le}$) se situe dans une plage comprise entre 20° et 75° ;
l'angle métallique sur le bord de fulte ($\alpha_{te}$) se situe dans une plage comprise entre -20° et 70° et est au maximum égal l'angle métallique sur le bord d'attaque ; et
l'angle de décalage ($\beta$) se situe dans une plage entre 0° et 70°; et dans lequel :

un minimum local ou absolu ($\lambda_{min}$) d'un angle de charge avant ($\lambda$), qui est égal à la différence de la moyenne arithmétique de l'angle métallique sur le bord d'attaque et le bord de fuite comme diminuende et de l'angle de décalage comme diminuteur

$(\lambda = \dfrac{\alpha_{le} - \alpha_{te}}{2} - \beta)$, se trouve dans une plage comprise entre 55% et 85% de la hauteur de pale radiale ; et
un maximum local ou absolu ($\lambda_{max}$) de l'angle de charge avant se situe dans une plage comprise entre 95% et 100 % de la hauteur de pale radiale, en particulier à une pointe de pale.

**2.** Compresseur axial selon la revendication précédente, **caractérisé en ce que** l'angle de charge avant ($\lambda$) diminue de manière monotone dans la direction radiale dans une plage comprise entre 50 % de la hauteur de pale radiale et le minimum absolu de l'angle de charge avant, en particulier fortement.

**3.** Compresseur axial selon l'une quelconque des revendications précédentes, **caractérisé en ce que** l'angle de charge avant ($\lambda$) augmente de manière monotone dans la direction radiale du minimum absolu de l'angle de charge avant à un maximum, en particulier à proximité de la pointe de pale, de l'angle de charge avant, en particulier fortement.

**4.** Compresseur axial selon l'une quelconque des revendications précédentes, **caractérisé en ce qu'**un maximum de l'angle de charge avant le plus proche de la pointe de pale est supérieur à la valeur moyenne arithmétique de l'angle de charge avant sur une plage de 0% à 40% de la hauteur de pale radiale.

**5.** Turbine à gaz comprenant un compresseur axial à un ou plusieurs étages situé en particulier en amont, en aval ou au centre selon l'une quelconque des revendications précédentes.

**6.** Groupe motopropulseur avec une turbine à gaz selon la revendication précédente.

# Fig. 1

# Fig. 2

# Fig. 3

**IN DER BESCHREIBUNG AUFGEFÜHRTE DOKUMENTE**

**In der Beschreibung aufgeführte Patentdokumente**

- US 20110286850 A

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*